# EUROPEAN PATENT APPLICATION

(11) **EP 4 455 771 A1**
(43) Date of publication of application: **30.10.2024**
(21) Application number: 23169533.9
(22) Date of filing: 24.04.2023
(51) Int. Cl.: G02C 13/00, G06V 40/16

(54) **METHOD AND DEVICE FOR FACE POSE ESTIMATION AND DETERMINATION OF CENTRATION PARAMETERS**

(71) Applicant: Carl Zeiss Vision International GmbH, 73430 Aalen (DE)
(72) Inventor: LINDEMEIER, Thomas, 89160 Dornstadt (DE); LEUBE, Alexander, 73431 Aalen (DE)
(74) Representative: Kraus & Lederer PartGmbB

(57) **Abstract**

A computer-implemented method suitable for pose estimation of a face of a person is provided. The method comprises identifying (10) a plurality of landmarks in a combined 2D and depth image of the face, and estimating (11) the pose of the face based on a principal component analysis of the plurality of landmarks. The estimated posed may the be used for determining centration parameters. Corresponding devices and computer programs are also discussed.

## Description

The present application relates to methods, in particular computer-implemented methods, for face pose estimation and to corresponding devices, as well as to methods and devices suitable for the determination of centration parameters. The process of determining such parameters and applying them to a spectacle lens is commonly referred to as centration. Centration parameters are parameters that are needed to correctly arrange, i.e., center, spectacle lenses in a spectacle frame such that the spectacle lenses are worn in a correct position relative to a person's eye.

Examples of such centration parameters comprise the interpupillary distance, the vertex distance, the pantoscopic angle, the y-coordinates of the left and right centration points (also referred to as the fitting point height), the face form angle, the distance visual point and further parameters defined in section 5 of DIN EN ISO 13666:2012 and, among other things, the inclination of the frame.

Centration parameters nowadays are usually determined by a computer-based procedure that also includes capturing images of a head of a person. In one approach, the person wears a spectacle frame when the images are captured. In some approaches, based on a plurality of images a model of the head of the person is determined, including a model of the spectacle frame in case the person wears the spectacle frame. In other approaches, a model of a spectacle frame is provided separately and then fitted to the model of the head of the person.

Some approaches for determining centration parameters use stationary devices, like the Zeiss Visufit 1000. This device includes a calibrated camera system including a plurality of cameras.

In recent years, centration methods were developed which do not need such a stationary device but use a mobile device like a smartphone or a tablet PC for centration. Such an approach is for example described in WO2021/233718A1.

For the correct centration, the pose of the face and hence of the head relative to a camera used for capturing the images has to be correct or at least has to be known, such that corrections based on the pose may be made. Pose, as used herein, refers to the combination of position and orientation in space, corresponding to the use of the term e.g. in robotics according to ISO 8373:2012 4.5. The pose may for example be given in six coordinates, three for example cartesian coordinates for the position and three for example angular coordinates for the orientation. Therefore, techniques for estimating the pose of the face, also referred to as face pose herein, are desirable.

EP 3 262 617 A1 discloses a method for fitting a pair of virtual spectacles on a real user face where a pose is estimated using a face user model and an image. Here, a face user model is required for estimating the pose.

WO 2021 / 257 406 A1 discloses a method for pupil localization using face mesh landmarks fusing a 2D image and a corresponding 3D depth map, which are used for generating a 3D face mesh which may be used to estimate the interpupillary distance (PD).

US2017 / 0 316 582 A1 discloses a pose estimation for a person's head using a depth camera. Here, sequences of images are used, i.e. a plurality of images with rotating head of the person have to be taken.

Further approaches are known from: Bazarevsky, Valentin, et al. "Blazeface: Sub-millisecond neural face detection on mobile gpus." arXiv preprint arXiv:1907.05047 (2019), Ruiz, Nataniel, Eunji Chong, and James M. Rehg. "Fine-grained head pose estimation without key points." Proceedings of the IEEE conference on computer vision and pattern recognition workshops. 2018, or Yang, Heng, et al. "Face alignment assisted by head pose estimation." arXiv preprint arXiv:1507.03148 (2015).

A further approach for head pose estimation is disclosed in US 2016 / 086 017, where a 2D image and a depth map of the head is captured and matched to a 3D model of a head of known orientation. In other words, a transformation from the image (including the depth map) to the 3D model is calculated, and this transformation (translation and rotation) yields the pose of the head. For this approach, a corresponding 3D head model and a calculation of the corresponding transformation is required.

Starting from this document, it is therefore an object to provide a pose estimation which does not require a head model and which may operate on single images including depth maps.

According to a first aspect, a computer-implemented method suitable for pose estimation of a face of a person is provided, comprising identifying a plurality of landmarks in a combined 2D and depth image of the face. The method is characterized by estimating the pose of the face based on a principal component analysis of the plurality of landmarks.

By using the principal component analysis, no head model is necessary for determining the pose, and the pose may be determined based on a single combined 2D and depth image.

Features of the above method will be further explained and defined in the following.

The pose, as already explained in the introductory portion, refers to the combination of position and orientation. The pose is generally determined with respect to some reference coordinate frame, for example in case of the above method with reference to a device used for capturing the combined 2D and depth images. The face refers to a portion of the head including at least the eyes, and typically also the nose and the mouth. For applications like centration, not the complete head is needed, but mainly an eye portion of the head including the eyes and possibly the nose (for placing a spectacle frame). When the pose of the face is known, also the pose of the head is known, as the face is a fixed part of the head.

A combined 2D and depth image, shortly referred to as combined image, refers to a 2D image and a depth image taken essentially from the same position relative to the head, or from positions having a fixed relationship with each other. The 2D image may be a color image like an RGB image (red, green, blue) or may also be a greyscale image or an infrared image. A depth image provides a map of distances of the device capturing the depth image to the object, in this case the face. In case of color images, combined 2D and depth images are also referred to as RGBD images. For capturing the 2D part of the combined 2D and depth image, any conventional image sensor, combined with corresponding camera optics may be used. To capture depth images, also any conventional depth sensor like a time-of-flight sensor may be used. The combined 2D and depth image may include two separate files or other data entities, wherein in one data entity for each 2D coordinate, i.e. pixel, a greyscale value or color value is given, and in another data entity for each 2D coordinate a depth value is given. The combined image may also include only a single data entity, where for each 2D coordinate both greyscale/color information and depth information is given. In other words, the way the information is stored in data entities like files is not important as long as for the face a greyscale/color information and depth information is available. A camera adapted for capturing combined 2D and depth images, in this case color images is also referred to as an RGBD camera. Some modern smartphones or also other mobile devices are equipped with such RGBD cameras or cameras and depth sensors separately. It should be noted that the depth image need not have the same resolution as the 2D images. In such a case, a scaling operation may be performed (downscaling or upscaling) to adapt the resolution of the 2D and depth images to each other. Furthermore, for example in a device like a smartphone the depth sensor and the RGB camera may be slightly offset to each other, and this offset may be corrected numerically in any conventional manner. The result is essentially a point cloud where each point has a 3D coordinate based on the 2D coordinates in the image and a depth coordinate from the depth sensor, as well as a color or greyscale value.

A landmark as used herein is a predefined point on the head. Landmarks as used herein may in particular be facial landmarks, i.e. particular points on the face. Such landmarks may for example include the tip of the nose, point of the nose bridge, corners of the mouth or of the eyes, points describing the eyebrows, the cheeks, the chin and the like. Such landmarks may be determined in the combined 2D and depth image of the face by various conventional means. For example, a trained machine learning logic like a neural network may be used to determine the landmark points. In this case, for training a number of combined 2D and depth images for a plurality of different face types are used as training data, where the landmarks may be manually annotated. After training, the trained machine learning logic determines the landmark points. Details may be found for example in Wu, Y., Hassner, T., Kim, K., Medioni, G., & Natarajan, P. (2017). Facial landmark detection with tweaked convolutional neural networks. IEEE transactions on pattern analysis and machine intelligence, 40(12), 3067-3074, Perakis, P., Passalis, G., Theoharis, T., & Kakadiaris, I. A. (2012). 3D facial landmark detection under large yaw and expression variations. IEEE transactions on pattern analysis and machine intelligence, 35(7), 1552-1564, or Wu, Y., & Ji, Q. (2019). Facial landmark detection: A literature survey. International Journal of Computer Vision, 127(2), 115-142 (2018). Landmark detection may be preceded by a segmentation, where for example, the background is separated from the face, and the face is segmented to provide face segments. The landmarks may then be extracted from the face segments. In other approaches, conventional image processing techniques may be used to determine the landmarks without using a machine-learning logic.

Therefore, the landmarks form essentially a point cloud of 3D points. The pose is estimated based on a principal component analysis of the plurality of landmarks, that is the point cloud. Principal component analysis (PCA) is a per se known technique for analyzing data sets containing a high number of features, in this case landmarks. The principal components of a collection of points in a real coordinate space, as the landmarks, are a sequence of unit vectors, where the i-th unit vector is the direction of a line that best fits the data while being orthogonal to the first i-1 vectors. Best fitting may be defined as one that minimizes the average perpendicular distance for the points to the line of the respective unit vector. The 0th component resulting from the principal component analysis is the mean value of the points, i.e. the respective coordinates (X,Y,Z) of the points added and divided by the number of points. The unit vectors are Eigenvectors of the covariance matrix of the data, in this case the landmarks.

Preferably, the 0th component, i.e. the mean values of the coordinates of the landmarks, is taken as the position of the head, and the orientation is taken from the first (for example first to third) unit vectors. For example, faces are usually elongated in the upright direction, and the first unit vector will correspond to the upright direction, also referred to as up vector. The next two-unit vectors then form a plane perpendicular to the upright direction, and thus the pose is known. In some cases, the correct mapping of the unit Eigenvectors to left/right and forward direction with respect to the camera are not found directly. This happens if heads are shaped different than the average face. In such cases, the method may therefore select as forward vector a vector that points towards the device used for capturing the combined image. The left/right direction is then calculated using the cross product of up vector and this forward vector.

In this way, position and orientation may be determined easily using the principal component analysis.

The landmarks may be identified in the above mentioned 2D image of the combined 2D and depth image, and 3D coordinates of the plurality of landmarks may be provided based on the landmarks in the 2D image and the associated depth information from the depth image. In this way, 3D landmarks may be generated based on the combined 2D and depth images.

Preferably, the estimated pose may be filtered using an averaging filter over the estimated pose and previous estimated poses. This is particular feasible if the method is performed more than once with the same face immediately after each other, where it may be assumed that the pose of the face changes only slightly. The previous estimated poses then are the estimated poses of previous executions of the method. The averaging filter may for example be an exponential moving average filter (EMA), which is a first order infinite impulse response filter that applies weighting factors which decrease exponentially, such that the farther in the past a previous estimated pose is, the lesser its weight in the filtering is.

This may increase the repeatability and reproducibility of the pose estimation.

While as mentioned above the method may be repeated, the method works when the combined 2D and depth image is a single combined 2D and depth image, i.e. only a single combined 2D and depth image is needed for the pose estimation.

Additionally, a computer comprising a processor configured to perform any of the above described methods is provided, i.e. at least the steps of identifying a plurality of landmarks in a combined 2D and depth image of the face, and estimating the pose of the face based on principal component analysis of the plurality of landmarks. A data processing system comprising a processor and a storage medium coupled to the processor, wherein the processor is adapted to perform the steps of the methods above based on a computer program stored in the storage medium is also provided, i.e. at least the steps of identifying a plurality of landmarks in a combined 2D and depth image of the face and estimating the pose of the face based on a principal component analysis of the plurality of landmarks. The term computer does not necessarily imply a single computer, but may also refer to a network of computers, with data transfer between the computers. For example, the identifying landmarks may be performed in one computer, and the data then may be transferred to another computer for the pose estimation.

A computer program comprising instructions which, when the program is executed by a computer, cause the computer to carry out any of the above methods is also provided. Furthermore, a computer-readable storage medium having stored thereon the above computer program, a data carrier signal carrying the computer program is also provided. Furthermore, a computer program stored in a non-transitory tangible computer-readable storage medium, the computer program comprising instructions which, when the program is executed by a computer, causes the computer to carry out any of the methods above is further provided.

According to a second aspect, a method suitable for determining at least one centration parameter for fitting spectacle lenses into a spectacle frame for a person is provided, where the method is characterized by capturing a combined 2D and depth image of a face of the person, estimating the pose of the face by any of the methods described above, and determining the at least one centration parameter based on the combined 2D and depth image and the estimated pose. In this way, centration parameters may be determined based on single combined 2D and depth image.

The general approach to determine the centration parameter is similar to those of conventional computer-based centration. The combined 2D and depth image is essentially treated as a 3D model of at least a part of the face, to which a frame model is provided, either based on a frame found in the image or a fitted frame model, and the centration parameters are then determined for example based on a position of pupils in the combined 2D and depth image and the position of the frame. However, by additionally using the estimated pose, the determination of the centration parameters may be made more precisely. Several approaches for this, which may be combined or used separately, will be described next.

In some embodiments, a deviation of the estimated pose from a reference pose may be determined. Based on the deviation, then information may be outputted to the person to correct the face pose, and the capturing and the estimating may be repeated. For example, the outputting may be made via a loudspeaker or via a display, and the person may be given instructions how to correct the pose (for example "move face to a more upright position", "tilt head more to the right/left" or the like). This may be repeated until the estimated pose matches the reference pose sufficiently, for example until the deviation is below a threshold.

Additionally or alternatively, the deviation may be mathematically compensated when determining the centration parameters. For example, a tilt of the head compared to an upright position may lead to a corresponding variation for some centration parameters like fitting height or pupillary distances, which can be corrected based on simple geometrical considerations. The two approaches may be combined, for example the person may be instructed to correct his/her face pose, and remaining deviations may then be treated mathematically.

In this way, a correct pose may be ensured for the determination of the centration parameters. In this way, deviations of the pose may be corrected.

In yet other embodiments, a spectacle frame model, also referred to as spectacle frame template, may be fitted to the combined 2D and depth image using the pose. The depth image might suffer from low image resolution or sensor noise. It is typically quite difficult for structured light-based sensors to capture objects of a smaller size due to the resolution of the projected pattern. For example, even if the person wears a spectacle frame in the combined image, the depth sensors is not able to capture it and interpolates depth values from the background resulting in incorrect depth information at the location of the worn frame. This happens in particular in cases of thin frame rims.

In such a case, a frame template consisting of planes for the left and right glasses may be fitted. The plane origin of the planes may be located at the frame bridge center for example detected in the 2D image using feature detecting or deep learning landmark models. Preferably, the method uses a fixed landmark at the nose region from the landmarks extracted for the pose estimation, referred to as nose bridge point. A region of interest is cut from the image around this nose bridge point. The method may then use classic image processing techniques such as edge detection to detect the frame bridge as the response with the highest magnitude inside this region of interest. This 2D position, i.e. the frame bridge as detected in the 2D image, is unprojected using the depth value at the respective location in the depth map and the camera intrinsics, which describe how a scene (3D world coordinates) is transferred to 2D image coordinates. The camera intrinsics are conventionally expressed as a matrix. An inverse of this matrix may be used to unproject a 2D pixel position in the 2D image together with its corresponding z value form the depth image back to a 3D position relative to the camera. This 3D position of the frame bridge in the camera coordinate frame (i.e. as resulting from the combined 2D and depth image) is then transformed to the face pose coordinate frame determined as above (up vector, forward vector, left/right vector). The position in the face pose coordinate frame may then be filtered with an averaging filter similarly as described above for the face pose to reduce noise of the detection. The template frame planes are then positioned with the frame bridge point in the face pose coordinate frame as origin and a rotation derived from wrap and pantoscopic angles that have been estimated as default angles empirically. For example, the wrap angle may be set to 5° and pantoscopic angle to 8°. The rotation is computed from these angles in a ground plane aligned face coordinate frame. This frame is derived from the face coordinate frame and the assumption that the capturing device is positioned in an upright manner with the optical axis parallel to the camera. This adjustment eliminates the problem that the face pose forward axis will not always align with the optical axis of the camera.

A 2D segmentation of the frame in rgb color space can be projected onto these planes to elevate the 2D model to 3D or a generic frame model may be positioned at these planes. This frame projection onto the planes is then used to estimate centration values such as fitting height, box size and frame center to eye point distances and back vertex distances, in a per se conventional manner. On devices with higher resolution depth sensors and thus can give the depth of a frame in the 2D image more precisely the pantoscopic tilt and frame bow angle may be directly calculated from the data. A 3D point cloud segmentation can then be used instead of the 2D image segmentation to separate frame points from head points. Planes can then be fitted directly to the left and right frame point cloud using RANSAC and least squares fitting. This approach is for example described in Martin A. Fischler & Robert C. Bolles (June 1981). "Random Sample Consensus: A Paradigm for Model Fitting with Applications to Image Analysis and Automated Cartography" (PDF). Comm. ACM. 24 (6): 381-395. doi:10.1145/358669.358692. S2CID 972888. The centration can then be estimated conventionally as described in the previous section.

The above centration process may be performed on frontal face images, i.e. images taken from the front. The computer may be a mobile device like a smartphone.

The above method for determining at least one centration parameters may be repeated a plurality of times, with different combined 2D and depth images. Then, final centration parameters may be determined by averaging over the centration parameters determined by the individual method.

A method for providing a spectacle lens is also provided, comprising determining at least one centration parameter as explained above, and manufacturing the spectacle lens based on the at least one centration parameter.

Also for the second aspect, a corresponding apparatus is provided. The apparatus includes a camera and a depth sensor for capturing a combined 2D and depth image of a face of a person, and a computer comprising a processor configured to perform the remaining steps of the methods above, i.e. at least the estimating of the pose of the face and determining the at least one centration parameters. Such an apparatus may be a mobile device like a smartphone or a tablet PC equipped accordingly. An apparatus including a camera device as mentioned above and a data processing system comprising a processor and a storage medium coupled to the processor, wherein the processor is adapted to perform the remaining steps apart from capturing the image, i.e. estimating the pose and determining the at least one centration parameter, is also provided. A computer program for an apparatus including a camera device is also provided, wherein the computer program, when executed on a processor of the device, causes execution of any of the above methods of the second aspect. Such a computer program may for example be provided as an App (application) for a mobile device like a smartphone.

A computer-readable storage medium having stored thereon the above computer program, and a data signal carrying the computer program is also provided. The computer program may be stored on a non-transitory tangible computer-readable storage medium, the computer program comprising instructions which, when the program is executed by a device including a camera device, cause the device to carry out the methods of the second aspect above.

The above-described methods and devices suitable for determining at least one centration parameter may also be employed with other approaches for estimating the pose than the one using the pose estimation based on principal component analysis mentioned above. For example, approaches for determining the pose mentioned in the introductory portion may be used. In other embodiments, conventional kits suitable for determining the pose based on the landmarks may be used. For example, in iOS systems, the ARKit provides a possibility of determining the face pose based on landmarks. In other embodiments, conventional deep learning approaches may be used, where a deep learning neural network is trained with sets of landmarks and associated poses to then, after training, output a pose based on the landmarks. Therefore, according to a third aspect for example a method suitable for determining at least one centration parameter for fitting spectacle lenses into a spectacle frame for a person is provided, characterized by capturing a combined 2D and depth image of a face of the person, estimating the pose of the face based on the combined 2D and depth image, and determining the at least one centration parameter based on the combined image and the estimated poses. A corresponding apparatus is also provided.

The further features, devices, computer programs and the like described above for the second aspect also apply to this third aspect correspondingly.

Furthermore, a method suitable for providing a spectacle lens is provided, comprising determining at least one centration parameter with any of the methods mentioned above, and centering the spectacle lens based on the at least one centration parameter.

Preferred embodiments will now be described referring to the attached drawings, wherein:
Fig.1 is a flowchart illustrating a method according to an embodiment,
Fig. 2 is a flowchart illustrating a method according to an embodiment,
Fig. 3 is a block diagram of an apparatus according to an embodiment,
Fig. 4A-4D, 5A-5C and 6A and 6B are graphs for explaining various types of the method of Figures 1 and 2.

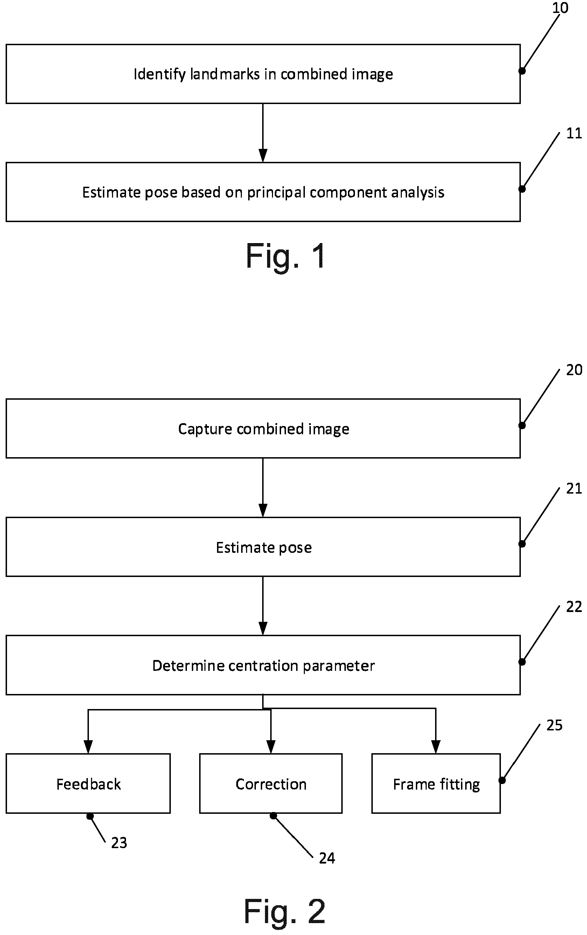

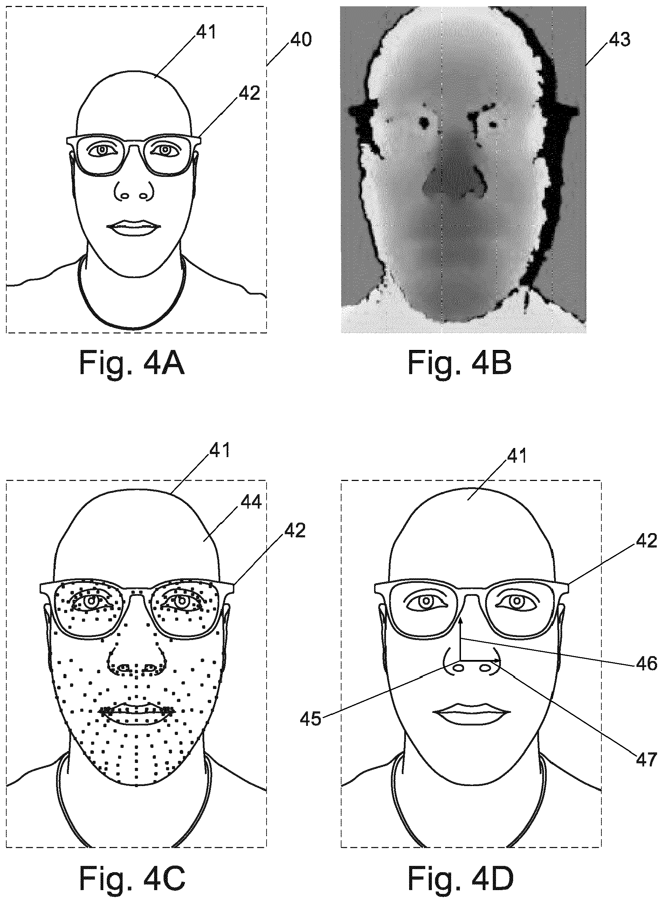

Fig. 1 is a flowchart illustrating a computer-implemented method for pose estimation according to an embodiment. In step 10, the method comprises identifying landmarks in a combined 2D and depth image, as discussed above. For illustration, Fig. 4A shows a 2D image 40 of a head 41, including the face, of a person, where the person wears a spectacle frame 42. Fig. 4B shows a corresponding depth map 43. For each pixel of the face 41 in 2D image 40, a corresponding depth may be taken from depth map 43. In the example shown, the resolution of the depth map 43 is lower than the one of 2D image 40, such that several pixels are assigned the same depth in the depth map. As can be seen, due to this, in this example the depth of the frame 42 is not captured correctly, black areas denoting areas where no correct depth can be assigned. In other embodiments, with a higher resolution the depth may be captured correctly.

Fig. 4C shows an example where a plurality of landmark points 34 are identified in the 2D image, where each landmark point identified in the 2D image is assigned a depth according to depth map 43 resulting in 3D landmarks.

Returning to Fig. 1, at step 12 a pose of the face is estimated based on a principal component analysis, as explained above. Fig.4D shows a corresponding result, where the position is denoted by an origin 45 of a coordinate system, corresponding to a mean position of the landmark points 44 of Fig. 4C as explained above, and arrows 46, 47 indicate the pose (arrow 46 the upright direction of the head and arrow 47 the left-right direction) corresponding to unit vectors.

Fig.2 illustrates a method suitable for determining at least one centration parameter according to an embodiment.

At step 20, the method comprises capturing a combined image of a head of a person, for example as shown in Figures 4A and 4B.

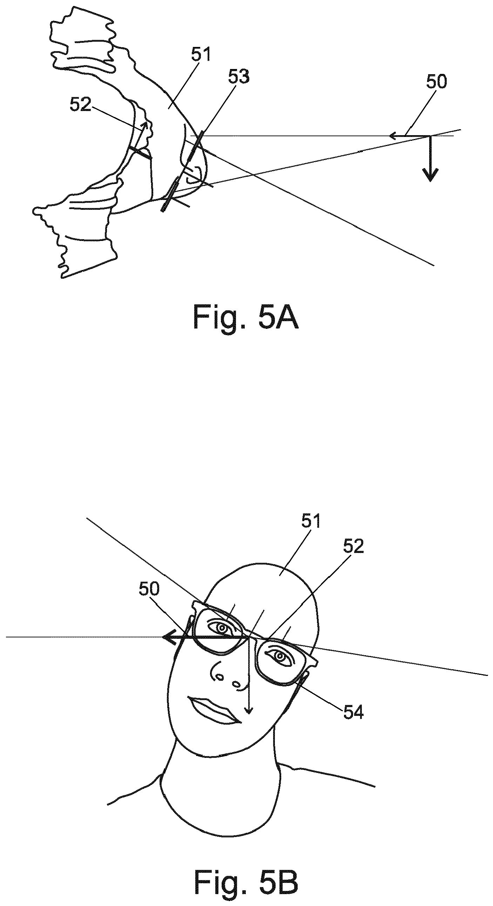

At step 21, the method of Fig. 2 comprises estimating a pose, for example using the method of Fig. 1 or any of the other methods mentioned above. In step 22, the method comprises determining at least one centration parameter as explained above. Steps 23-25 illustrate several possibilities how the pose estimate from step 21 may be used in determining the centration parameter, as also has been explained above. At 23, feedback is given to the person if the pose does match a reference pose, such that the person can correct his or her pose, and the method can be started again. At 24, a mathematical correction may be performed. Steps 23 and 24 will be illustrated referring to Figures 5A-5C.

Ideally, the pose of the head is at least approximately as shown in Fig. 4A, i.e. upright with eyes looking essentially straight ahead. Figures 5A-5C show various deviations from this ideal pose.

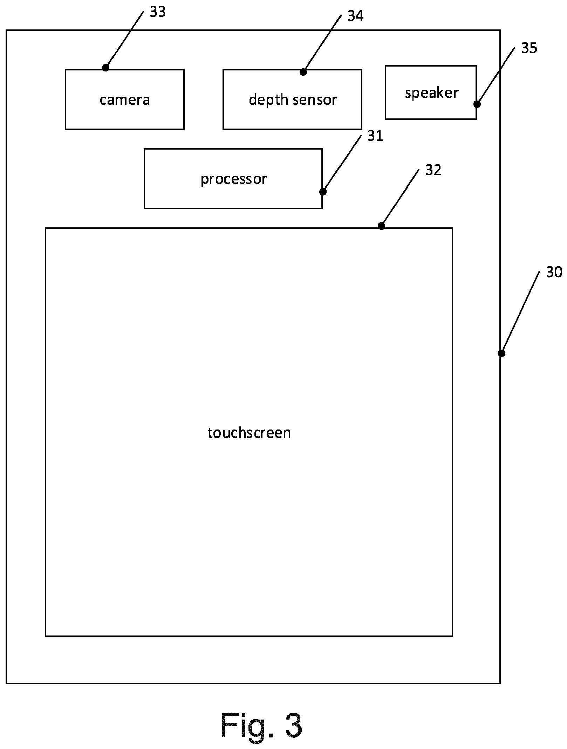

In Figures 5A-5C, reference numeral 51 denotes the combined 2D and depth image, where each pixel has 3D coordinates. Numeral 50 denotes a reference coordinate system of a device used for capturing the combined 2D and depth image (see the description of Fig. 3 further below for an example of such a device). Numeral 52 in each case denotes a coordinate system given by the pose of the head (for example, origin 45 of Fig. 4D and axis according to arrows 46, 47 of Fig. 4D and a third axis perpendicular thereto).

Fig. 5A shows, in a top view, a case where the person does not look straight ahead towards the camera, but at an angle. In such a case, the person may be instructed to look more straight ahead, and the method is repeated. Additionally or alternatively, at step 24, the deviation may be accounted for mathematically. For example, in Fig. 5A reference numeral 53 denotes planes of lenses of a spectacle frame worn by the person. From the perspective of the camera (i.e. from coordinate system 50), the point where a line from the pupils to the camera intersect the planes 53 differs from a straight forward looking case. As the pose, in particular the angle by which the head is rotated compared to the frontal position of Fig. 4A is known by the pose estimation, this difference can be corrected mathematically by simple geometry considerations.

Fig. 5B shows an example where the head is tilted to the side. Reference numerals 54 denotes a spectacle frame. Here, for example in step 23 instructions may be issued to the person to hold the head more upright, or also here, as the relative angles between the pose as indicated by a coordinate system 52 and the coordinate system 50 is known, mathematical corrections can be employed. It should be noted that deviations from the upright pose in Figures 5A-5C are drawn in an exaggerated manner to give a better understanding, but in practice the deviations may be smaller.

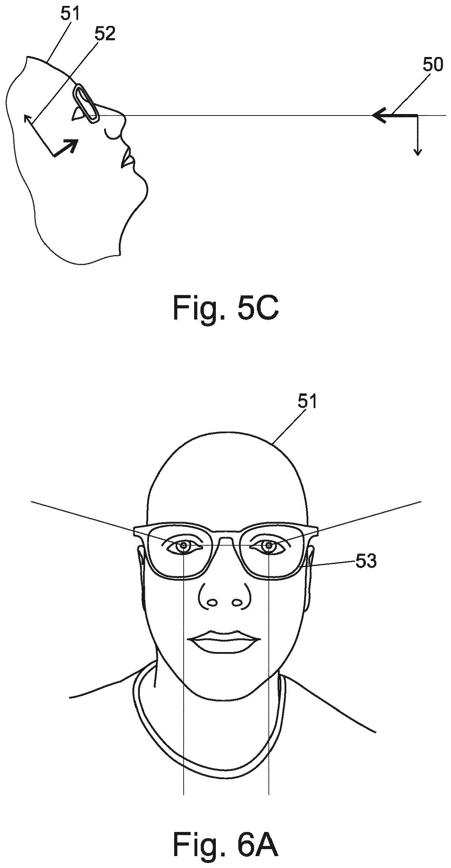

Fig. 5C shows a side view where the head is tilted backwards. Also this changes the point where, as seen from coordinate system 50, the person looks through the spectacle frame. Either, in step 23, the person may be instructed to keep the head more upright, or again in step 24 a mathematical correction may be performed.

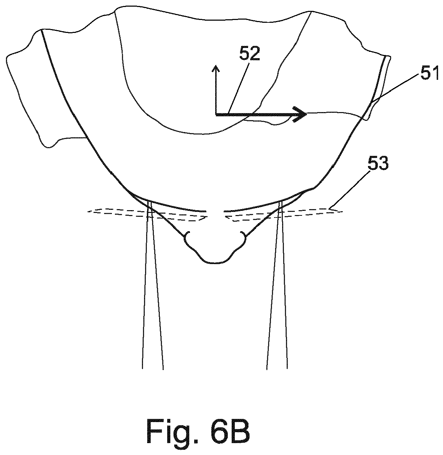

Returning to Fig. 2, additionally or alternatively in step 24 a frame template, which is then used for determining the centration parameters, may be fitted to the point cloud of the face defined by the combined 2D and depth image. This will be explained referring to Figures 6A and 6B. Fig. 6A shows a frontal image of the face point cloud 51, with a spectacle frame 53. While the spectacle frame may be identified in the 2D image (see Fig. 4A), depth information may not be reliable (see Fig. 4B). Therefore, as visible in the top view of Fig. 6B, the frame templates 53 are positioned based on a 2D segmentation of the frame from the 2D image constrained by the face pose and fixed frame bow angle and pantoscopic angle. In particular, for example from the landmarks of Fig. 4C points of the nose are known, and from the pose estimation indicated by coordinate system 52 the directions are known, such that the planes 53 may be positioned at the correct locations and in the correct directions.

The method of Fig. 1 may be implemented using any computer device. The method of Fig. 2 may be implemented in any computer device combined with a camera, which may be external to the device. However, preferably, the methods are implemented in a mobile device like a smartphone or tablet PC, like a mobile device 30 schematically shown in Fig. 3. Mobile device 30 includes a touchscreen 32 which is used as an input output device, for example for inputting instructions by a user and/or outputting instructions of step 23 of Fig. 2. Additionally or alternatively, such instructions may also be output via a loudspeaker 35 or for example a headset coupled to mobile device 30 in a conventional manner, for example via Bluetooth.

Mobile device 30 furthermore comprises a camera 33 and depth sensor 34 for capturing the combined 2D and depth images. As explained above, some current smartphones already include such a camera device including camera 33 and depth sensor 34.

Furthermore, mobile device 30 includes a processor 31, which controls mobile device 30 to perform the methods as described with respect to Figures 1 and 2, i.e. controls camera 33 and depth sensor 34 to capture combined 2D and depth images, and to perform calculations for the other steps of Figures 1 and 2.

## Claims

1. A computer-implemented method suitable for pose estimation of a face (41) of a person, comprising:
identifying (10) a plurality of landmarks (44) in a combined 2D and depth image (40, 43) of the face,
**characterized by**
estimating (11) the pose of the face (41) based on a principal component analysis of the plurality of landmarks (44).

2. The method of claim 1, **characterized in that** estimating (11) the pose of the face (41) based on the principal component analysis of the plurality of landmarks (44) comprises estimating a position of the face (41) based on a mean position of the plurality of landmarks (44).

3. The method of claim 1 or 2, **characterized in that** estimating (11) the pose of the face (41) based on the principal component analysis of the identified landmarks (44) comprises estimating the orientation of the face (41) based on at least one unit vector resulting from the principal component analysis.

4. The method of any one of claims 1 to 3, wherein identifying (10) the plurality of landmarks (44) comprises identifying the plurality of landmarks (44) in a 2D image (40) of the combined 2D and depth image (40, 43), and providing 3D coordinates of the plurality of landmarks (44) based on the plurality of landmarks (44) in the 2D image (40) and depth information from a depth map (43) of the combined 2D and depth image (40, 43).

5. The method of any one of claims 1 to 4, **characterized by** filtering the estimated pose using an averaging filter over the estimated pose and previous estimated poses.

6. The method of any one of claims 1 to 5, **characterized in that** the combined 2D and depth image (40, 43) is a single combined 2D and depth image.

7. A method suitable for determining at least one centration parameter for fitting spectacle lenses into a spectacle frame for a person, **characterized by**:
capturing (20) a combined 2D and depth image (40, 43) of a face (41) of the person,
estimating (21) the pose of the face (41) by the method of any one of claims 1 to 6, and
determining (22) the at least one centration parameter based on the combined 2D and depth image (40, 43) and the estimated pose.

8. The method of claim 7, **characterized in that** the determining (22) the at least one centration parameter based on the combined 2D and depth image (40, 43) and the estimated pose comprises:
determining a deviation of the estimated pose from a reference pose,
outputting information to the person to correct the pose based on the deviation, and
repeating the capturing (20) and the estimating (21).

9. The method of claim 7 or 8, **characterized in that** the determining (22) the at least one centration parameter based on the combined 2D and depth image (40, 43) and the estimated pose comprises:
determining a deviation of the estimated pose from a reference pose, and
at least partially correcting (24) the deviation in the determination of the at least one centration parameter.

10. The method of any one of claims 7 to 9, **characterized in that** the determining (22) the at least one centration parameter based on the combined 2D and depth image (40, 43) and the estimated pose comprises:
fitting a spectacle frame template (53) to the combined 2D and depth image (40, 43) based on the pose, and
determining the at least one centration parameter based on the fitted spectacle frame template (53).

11. A method for providing a spectacle lens, **characterized by** comprising determining at least one centration parameter by the method of any one of claims 7 to 10, and manufacturing the spectacle lens based on the at least one centration parameter.

12. A computer program comprising instructions which, when the program is executed by a computer, cause the computer to carry out the method of any one of claims 1 to 6.

13. A computer program for a device (30) including a camera (33), a depth sensor (34) and at least one processor (31), comprising instructions which, when the program is executed by the at least one processor (31), causes execution of the mthod of any one of claims 7 to 10.

14. A computer comprising a processor configured to perform the steps of identifying (10) a plurality of landmarks (44) in a combined 2D and depth image (40, 43) of the face, and estimating (11) the pose of the face (41) based on a principal component analysis of the plurality of landmarks (44).

15. An apparatus comprising a camera (33), a depth sensor (34) and at least one processor (31), configured to cause the apparatus to perform the steps of capturing (20) a combined 2D and depth image (40, 43) of a face (41) of the person,
identifying (10) a plurality of landmarks (44) in a combined 2D and depth image (40, 43) of the face, and
estimating (11) the pose of the face (41) based on a principal component analysis of the plurality of landmarks (44), and
determining (22) the at least one centration parameter based on the combined 2D and depth image (40, 43) and the estimated pose.
